# EUROPÄISCHE PATENTSCHRIFT

(11) **EP 0 942 442 B1**
(45) Veröffentlichungstag und Bekanntmachung des Hinweises auf die Patenterteilung: **07.05.2003**
(21) Anmeldenummer: 99103998.3
(22) Anmeldetag: 11.03.1999
(51) Int. Cl.: H01F 27/06

(54) **Umspannstation in Kompaktbauweise**
Transformer station with compact construction
Poste transformateur à construction compacte

(30) Priorität: 13.03.1998 DE 19810908
(43) Veröffentlichungstag der Anmeldung: 15.09.1999
(73) Patentinhaber: EnBW Badenwerk AG, 76131 Karlsruhe (DE); Betonbau GmbH, D-68753 Waghäusel (DE)
(72) Erfinder: Jäger, Dieter, 76199 Karlsruhe (DE)
(74) Vertreter: Pfeifer, Hans-Peter, Dr.

(56) Entgegenhaltungen:
- EP-A- 0 768 741
- CH-A- 352 721
- DE-A- 2 243 383
- DE-A- 2 401 531
- DE-A- 4 135 850
- DE-C- 919 829
- DE-C- 922 243
- DE-U- 29 606 617

## Beschreibung

Die Erfindung richtet sich auf eine Umspannstation in Kompaktbauweise mit einer gasisoliert verkapselten Hochspannungsschaltanlage. Solche Umspannstationen werden vor allem in der Ortsnetzversorgung verwendet, um eine Mittelspannung (in Deutschland zwischen 12 und 36 kV, in anderen Staaten zum Teil bis zu 52 kV) in die Verteilungsspannung des Ortsnetzes (in der Regel 0,4 kV) umzuspannen. Sie haben drei Hauptkomponenten, nämlich einen Transformator und je eine Schaltanlage auf der Hochspannungsseite und auf der Niederspannungsseite des Transformators. Die hochspannungsseitige Schaltanlage wird hier als Hochspannungsschaltanlage bezeichnet, obwohl sie wie erläutert im Sinne der Netztechnik eine Mittelspannung schaltet.

In früheren Zeiten wurden Umspannstationen als Individualgebäude hergestellt. Seit mehreren Jahrzehnten sind jedoch zunehmend fabrikfertige Kompakt-Stationen gebräuchlich geworden, deren Gehäuse in der Regel als Beton-Fertigteil ausgebildet ist. Solche fabrikfertigen Kompakt-Umspannstationen müssen eine Vielzahl teilweise widersprüchlicher Anforderungen erfüllen.

Einerseits sollen sie ein möglichst kleines Volumen haben. Es wird für die Energieversorgungsunternehmen immer schwerer, die Genehmigung für die Plazierung einer Umspannstation an einem technisch gut geeigneten Platz zu erhalten. Entscheidend ist dabei, daß die Station möglichst klein und unauffällig ist, so daß ihre Errichtung auch in bebauten Gebieten (beispielsweise auch in Vorgärten) akzeptiert wird. Eine möglichst kompakte Bauweise und ein geringes Gewicht ist darüber hinaus auch im Hinblick auf die Transportierbarkeit der Station wichtig. Idealerweise sollte die Station einschließlich der vorinstallierten Einrichtung mit den auf diesem Gebiet üblichen Baufahrzeugen (die beispielsweise auch zum Transport von Kabeltrommeln dienen) transportiert werden können.

Die Möglichkeit zur räumlichen Verkleinerung der Station ist andererseits durch die Anforderungen an deren Funktion, vor allem hinsichtlich Bedienbarkeit, Geräuscharmut und Sicherheit begrenzt. Die Montage, Wartung und Prüfung der Stationseinrichtungen erfordert eine gute Zugänglichkeit und somit einen ausreichenden Freiraum innerhalb des Gehäuses. Auch die Geräuschisolation wird umso problematischer, je kompakter die Bauweise ist.

Ein besonderes Problem stellt die Sicherheit im Falles eines Funktionsfehlers dar. Die einschlägigen Normen stellen strenge Kriterien für die Sicherheit auf. Beispielsweise wird gemäß der IEC 1330 eine Lichtbogen-Sicherheitsprüfung für fabrikfertige Umspannstationen empfohlen. Wenn im Betrieb innerhalb der gasisoliert verkapselten Hochspannungsschaltanlage ein Lichtbogenfehler (d.h. ein infolge einer Fehlfunktion auftretender Lichtbogen zwischen zwei auf unterschiedlichem elektrischem Potential liegenden leitenden Bauteilen) auftritt, entsteht ein starker und heißer Gasstoß. Dieser Gasstoß wird im Fachjargon auch als "Explosionsdruckwelle" bezeichnet. Auch wenn der Vorgang des Zündens und Brennens eines Fehlerlichtbogens in der Hochspannungsanlage nicht als Explosion im eigentlichen Sinn anzusehen ist, verdeutlicht diese Bezeichnung die Stärke und Intensität der Ausbreitung heißer Gase. Sie breiten sich in dem Stationsgehäuse nahezu explosionsartig aus und entweichen durch deren Lüftungsöffnungen. Da die Aufstellungsorte von Kompaktstationen in der Regel für jedermann zugänglich sind, müssen Verletzungsrisiken selbst in ungünstigen Fällen, bei denen sich eine Person in unmittelbarer Nähe der Lüftungsöffnung befindet, vermieden werden. Dies ist verständlicherweise umso schwerer zu realisieren, je kompakter das Gebäude ist.

Um diesen Anforderungen gerecht zu werden und dennoch eine möglichst kompakte Gestaltung zumindest des sichtbaren Teils der Umspannstation zu erreichen, sind Stationen vorgeschlagen worden, die zur teilweisen Einsenkung in das Erdreich geeignet sind ("Teil-Unterflurstationen"). Eine solche Station wird beispielsweise in der EP 0209027 B1 beschrieben. Durch Unterflurkonstruktionen werden zwar die sichtbaren Außenmaße nach dem Einbau vermindert. Die Rohmaße, die für den Transport, das Gewicht und die Herstellungskosten des Gehäuses entscheidend sind, werden hiervon jedoch nicht beeinflußt. Die thermischen und sicherheitstechnischen Probleme werden noch verstärkt, weil Lüftungsöffnungen naturgemäß nur im oberirdischen Bereich des Stationsgehäuses möglich sind.

Um eine hinsichtlich dieser vielfältigen Anforderungen verbesserte Lösung zu erreichen, wird erfindungsgemäß eine Umspannstation in Kompaktbauweise mit den Merkmalen des Anspruchs 1 vorgeschlagen.

Im Zusammenhang mit offenen Schaltanlagen sind Umspannstationen, bei denen der Transformator unterhalb der Hochspannungsschaltanlage und mit dieser in einer gemeinsamen Kammer positioniert ist, bereits vor langer Zeit beschrieben worden. Beispielsweise ist in dem deutschen Patent 919829 eine Umspannstation zur teilweisen Einsenkung in das Erdreich dargestellt, die eine solche Anordnung in einem mittels eines Verschlußteils verschließbaren Gehäuse aufweist, dessen unterer Teilabschnitt in das Erdreich einsenkbar ist und dessen oberer Teilabschnitt über die Geländefläche hinausragt. Da bei einer offenen Schaltanlage im Falle eines Kurzschlusses nur ein im Vergleich zu einer gasisoliert verkapselten Hochspannungsschaltanlage sehr geringer und ungerichteter Druckstoß entsteht, bestehen dort die von der Erfindung gelösten sicherheitstechnischen Probleme nicht.

Die Anordnung des Transformators unterhalb der Hochspannungsschaltanlage bedeutet nicht notwendigerweise, daß die Schaltanlage vertikal über dem Transformator positioniert ist. Vielmehr ist auch eine Ausführungsform möglich, bei der die Hochspannungsschaltanlage gegenüber dem Transformator in Horizontalrichtung versetzt, also schräg oberhalb des Transformators angeordnet ist. Besonders bevorzugt ist im Hinblick auf eine besonders kompakte Bauweise jedoch eine Konstruktion, bei der sich zumindest die wesentlichen Teile der Hochspannungsschaltanlage vertikal oberhalb der größten Querschnittsfläche des Transformators befinden.

Der Transformator und die Hochspannungsschaltanlage befinden sich bei der Erfindung in einer gemeinsamen Kammer, in der ein im wesentlichen unbehinderter Gasaustausch möglich ist. Diese offene Konstruktion erleichtert die Montage und Wartung der Einrichtungen. Vorzugsweise sind der Transformator und die Hochspannungsschaltanlage an einer gemeinsamen Tragkonstruktion, beispielsweise einem Rahmen aus Stahlprofilen, derartig befestigt, daß sie zusammen aus der Kammer herausgenommen werden können. Bei einer Teil-Unterflurkonstruktion geschieht dies durch Herausziehen nach oben, wobei der geöffnete Verschlußdeckel einen ausreichend großen Ausschnitt der oberen Deckfläche, bevorzugt den gesamten lichten Querschnitt am Oberende der Umspannstation freigibt.

Die erfindungsgemäße Konstruktion erscheint aus thermischen Gründen zunächst ungünstig, weil einerseits die Abwärme des im Betrieb heiß werdenden Transformators von dessen Kühlflächen zu der Hochspannungsschaltanlage aufsteigt und diese thermisch belastet und weil andererseits der Transformator im Falle einer Teil-Unterflurkonstruktion in dem unbelüfteten und durch das Erdreich thermisch isolierten Teil des Gehäuses angeordnet ist. Im Rahmen der Erfindung wurde jedoch festgestellt, daß entgegen diesen Bedenken keine durchgreifenden thermischen Probleme auftreten. Es wird sogar eine besonders günstige Kombination extrem kompakter Baumaße und hoher Sicherheit im Falle eines Lichtbogenfehlers erreicht. Dabei wird der im Falle eines Lichtbogenfehlers in der Hochspannungsschaltanlage auftretende Gasstoß bevorzugt nach unten in Richtung auf den Transformator gelenkt.

Die Erfindung wird nachfolgend anhand eines in den Figuren schematisch dargestellten Ausführungsbeispiels näher erläutert. Darin sind weitere bevorzugte Ausgestaltungen dargestellt, die bei der Erfindung einzeln oder in Kombination eingesetzt werden. Es zeigen:
- Fig. 1: Einen Längsschnitt durch eine erfindungsgemäße Umspannstation,
- Fig. 2: Einen Seitenschnitt durch die Umspannstation gemäß Fig. 1,
- Fig. 3: Einen Seitenschnitt entsprechend Fig. 2 während des Austauschs der Stationseinrichtung.

Die in den Figuren dargestellte Umspannstation 1 hat ein im wesentlichen quaderförmiges Gehäuse 2. Das Gehäuse ist mit seinem unteren Teilabschnitt 3 im Erdreich 4 eingesenkt, während sein oberer Teil 5 über die Geländeoberfläche 6 hinausragt. Bevorzugt ist der untere Teilabschnitt 3 größer als der obere Teilabschnitt, das Gehäuse 2 also um mehr als die Hälfte im Erdreich versenkt. Die Höhe des oberen Teilabschnittes sollte nicht wesentlich mehr als 1 m (höchstens 1,1 m) betragen.

Der obere Teilabschnitt 5 des Gehäuses 2 weist eine Montage- und Bedienungsöffnung 8 auf, die zumindest einen großen Teil, bevorzugt den gesamten lichten Querschnitt des Gehäuses 2 von oben her zugänglich macht. Vorteilhafterweise erstreckt sich die Montage- und Bedienungsöffnung 8 nicht nur über die obere Deckfläche 9, sondern auch über einen Teil der Vorderseite 10 des aus dem Erdreich 4 herausragenden oberen Teilabschnittes 5 der Umspannstation 1. Sie ist mit einem im Seitenschnitt L-förmig gestalteten Verschlußdeckel 11 verschließbar. Er ist an der Oberkante der Rückwand 13 des als Beton-Fertigteil ausgebildeten Unterteils 7 des Gehäuses 2 schwenkbar befestigt.

Besonders günstig ist es, wenn - wie dargestellt - an der Vorderseite 10 im Anschluß an den kürzeren Schenkel des L-förmigen Verschlußdeckels 11 eine demontierbare Wandplatte 12 vorgesehen ist. Zu normalen Wartungs- und Bedienungsarbeiten genügt es, den Deckel 11 zu öffnen. Die Wandplatte 12 verhindert dabei, daß versehentlich Werkzeuge oder andere Gegenstände in den Innenraum der Station 1 fallen. Andererseits kann sie (zweckmäßigerweise mit einer einfachen Verriegelung) gelöst und herausgenommen werden, wenn für besondere Reparaturen ein Zugang in die Tiefe der Station erforderlich ist.

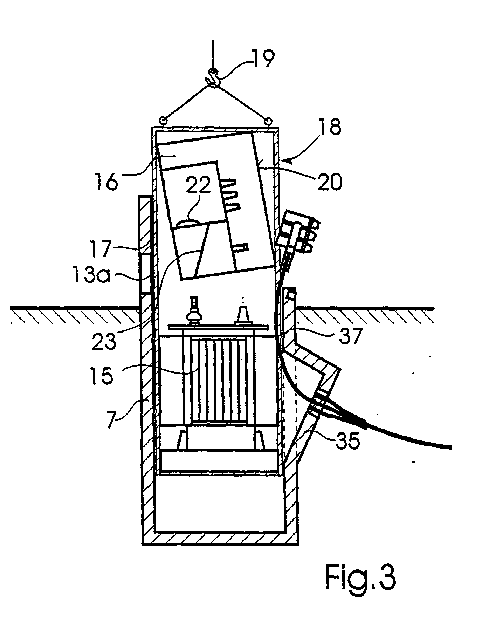

Im Inneren der Station 1 sind in einer gemeinsamen Kammer 14 ein Transformator 15 und darüber eine Hochspannungsschaltanlage 16 positioniert. Diese beiden Einrichtungen sind an einer gemeinsamen Tragkonstruktion 17 in Form eines Stahlrahmens derartig befestigt, daß sie insgesamt als Funktionseinheit 18 mittels eines Krans (von dem in Figur 3 nur der Haken 19 dargestellt ist) in die Kammer 14 eingesetzt oder aus ihr herausgenommen werden können.

Die Hochspannungsschaltanlage 16 ist gasisoliert ausgebildet, d.h. ihre Schalter sind von einer hermetisch abgeschlossenen Kapselung umschlossen, die mit einem elektrisch gut isolierenden Gas (gebräuchlich ist Schwefelhexafluorid) gefüllt ist. Zur Erleichterung einer einfachen Bedienung ist es vorteilhaft, wenn sie derartig montiert ist, daß ihre Bedienfläche 20, wie dargestellt, schräg nach oben geneigt orientiert ist.

Zur Erhöhung der Sicherheit im Falle eines Lichtbogenfehlers ist, wie erläutert, die Gasführung in dem Gehäuse 2 so gestaltet, daß der aus der Hochspannungsschaltanlage 16 austretende Gasstoß nach unten in Richtung auf den Transformator gelenkt wird.

Eine gekapselte Hochspannungsschaltanlage hat üblicherweise für den Fall eines Lichtbogenfehlers eine Berstscheibe 22, die sich bei der in den Figuren dargestellten Ausführungsform an der Rückwand der Kapselung befindet und gestrichelt dargestellt ist. Als Gasführungselement ist hinter der Berstscheibe 22 ein Prallblech 23 vorgesehen, das im Falle eines Lichtbogenfehlers die durch die Berstscheibe 22 austretenden Gase nach hinten und dann in Verbindung mit der Ausbildung und Positionierung der Hochspannungsschaltanlage 16 nach unten in Richtung auf den Transformator (Pfeil 24) ablenkt. Vorzugsweise wird der Gasstoß im weiteren Verlauf parallel zu den (an den Seiten des Transformators 15 vertikal verlaufenden) Kühlflächen 25 gelenkt. Obwohl die Kühlflächen 25 im Betrieb des Transformators 15 heiß sind, bewirkt dies eine hocheffektive Verminderung der Temperatur und der Strömungsgeschwindigkeit der explosionsartig austretenden Gase.

Dieser Effekt wird weiter verbessert, wenn gemäß einer besonders bevorzugten Ausführungsform der Gasstoß derartig gelenkt wird, daß er um den Transformator herum zunächst auf einer ersten Seite nach unten (Pfeil 24), dann unterhalb des Transformators horizontal (Pfeil 26) und schließlich auf einer zweiten Seite des Transformators wieder nach oben (Pfeil 27) geführt wird. Schließlich tritt der Gasstoß durch Lüftungsöffnungen in dem aus dem Erdreich 4 herausragenden oberen Teilabschnitt 5 des Gehäuses 2 aus.

Lüftungsöffnungen können vor allem in der Vorderwand 10 und in der Rückwand 13, in der Vorderwand 10 sowohl in dem vertikalen Abschnitt des L-förmigen Profils des Verschlußdeckels 11 als auch in der demontierbaren Wandplatte 12 vorgesehen sein. Dabei ist eine asymmetrische Verteilung der Lüftungsöffnungen vorteilhaft, bei der (wie dargestellt) die oberste Lüftungsöffnung 10a an der Vorderwand 10 höher als die oberste Lüftungsöffnung 13a an der Rückwand 13 (oder umgekehrt die oberste Lüftungsöffnung an der Rückwand höher als die oberste Lüftungsöffnung an der Vorderwand) positioniert ist.

Ein solcher Gasstrom wird bei der dargestellten Ausführungsform durch das Zusammenwirken des Prallbleches 23, der auf beiden Seiten des Transformators 15 verlaufenden Kühlflächen 25 und durch einen Zwischenraum 29 im Sockel 28 des Transformators erreicht. Die Elemente 23, 25 und 28 bilden somit eine Gasführung, die die gewünschte Lenkung des Gasstoßes um den Transformator herum bewirkt.

Wie erläutert sind der Transformator 15 und die Hochspannungsschaltanlage 16 gemeinsam in einer einzigen Kammer 14 untergebracht, die man als Hauptkammer der Station bezeichnen kann. Dies schließt selbstverständlich nicht aus, daß innerhalb der Hauptkammer 14 Zwischenträger vorhanden sind. Auch ein sich über einen Teil der Querschnittsfläche erstreckender Zwischenboden kann vorgesehen sein. Derartige Einbauten sollen jedoch so gestaltet sein, daß ein freier Gasaustausch innerhalb der Hauptkammer 14 (insbesondere die beschriebene Strömung des im Falle eines Lichtbogenfehlers beschriebenen Gasstoßes) möglich ist.

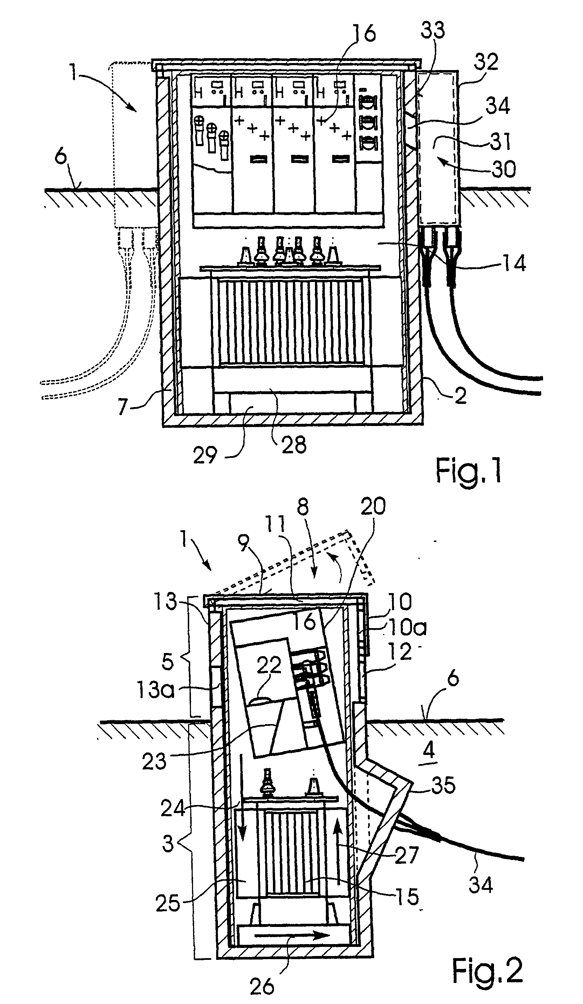

Die Niederspannungsschaltanlage kann in der allgemeinsten Form der Erfindung innerhalb des Gehäuses 2 - bevorzugt in einer von der Hauptkammer 14 gesonderten Kammer 31 - positioniert sein. Bevorzugt ist jedoch eine modulare Konstruktion der Station 1, bei der sich die Niederspannungsschaltanlage 30 in einem außen an der Station lösbar befestigbaren Modul 32 befindet. Die Kabelverbindung zwischen der Niederspannungsschaltanlage 30 und der Hauptkammer 14 wird dabei direkt durch eine im befestigten Zustand an das Gehäuse 2 der Station 1 angrenzende Rückwand 33 des Moduls 32 geführt. In Figur 1 ist der Übersichtlichkeit halber nur die für diese Kabeldurchführung vorgesehene Öffnung 34 in der Wand des Gehäuses 2 dargestellt.

Die modulare Konstruktion der Niederspannungsschaltanlage 30 ermöglicht eine flexible Gestaltung, bei der eine Niederspannungsschaltanlage 30 wahlweise an jeder Seite des Gehäuses 2 (in Figur 1 ist eine zweite Niederspannungsschaltanlage punktiert dargestellt) oder als räumlich getrennter Bestandteil der Umspannstation 1 eingesetzt werden kann.

Um einen hinreichend großen Biegeradius des zu der Hochspannungsschaltanlage 16 führenden Hochspannungskabels 34 bei gleichzeitig minimalen Abmessungen des Gehäuses 2 zu gewährleisten, weist die entsprechende Wand (hier die Vorderwand 37) des unteren Teilabschnitts 3 des Gehäuses 2 eine Ausbuchtung mit einem schräg nach unten geneigten Teilabschnitt 35 auf, in dem die feuchtigkeitsdichte Kabeldurchführung für das Hochspannungskabel 34 angeordnet ist. Aus ähnlichen Gründen ist die in Figur 3 erkennbare Gestaltung des Steckanschlusses für die Hochspannungsschaitanlage 16 vorteilhaft, bei der das Kabel 34 in den Stecker 36 quer zu dessen Steckrichtung eingeführt wird.

## Patentansprüche

1. Umspannstation (1) in Kompaktbauweise zur teilweisen Einsenkung in das Erdreich (4) mit einem Transformator (15), einer gasisoliert verkapselten Hochspannungsschaltanlage (16), einer Niederspannungsschaltanlage (30) und einem mittels eines Verschlußdeckels (11) verschließbaren Gehäuse (2),wobei
der untere Teilabschnitt des Gehäuses (2) in das Erdreich einsenkbar ist und der oberere Teilabschnitt des Gehäuses (2) über die Geländefläche hinausragt,
der Transformator (15) unterhalb der Hochspannungsschaltanlage (16) mit dieser in einer gemeinsamen Kammer (14), innerhalb der ein freier Gasaustausch möglich ist, positioniert ist und die Hochspannungsschaltanlage (16) derartig ausgebildet und positioniert ist, daß ein im Falle eines Lichtbogenfehlers aus der Hochspannungsschaltanlage (16) austretender Gasstoß nach unten in Richtung (24) auf den Transformator (15) gelenkt wird.

2. Umspannstation nach Anspruch 1, **dadurch gekennzeichnet, daß** mindestens ein Teil (7) des Gehäuses (2) als Beton-Fertigteil ausgebildet ist.

3. Umspannstation nach Anspruch 1 oder 2, **dadurch gekennzeichnet, daß** der Transformator (15) und die Hochspannungsschaltanlage (16) an einer gemeinsamen Tragkonstruktion (17) derartig befestigt sind und der Verschlußdeckel (11) einen so großen Querschnitt der Deckfläche (9) des Gehäuses (2) freigibt, daß die Tragkonstruktion (17) mit dem Transformator (15) und der Hochspannungsschaltanlage (16) insgesamt als Funktionseinheit (18) mittels eines Krans in die Kammer (14) eingesetzt oder aus ihr herausgenommen werden kann.

4. Umspannstation nach einem der vorhergehenden Ansprüche, **dadurch gekennzeichnet, daß** der Verschlußdeckel (11) in Seitenansicht L-förmig ausgebildet und derartig schwenkbar ist, daß er beim Öffnen die obere Deckfläche (9) und einen Teil der Vorderseite (10) des oberen Teilabschnittes (5) des Gehäuses (2) freigibt.

5. Umspannstation nach Anspruch 4, **dadurch gekennzeichnet, daß** an der Vorderseite (10) des Gehäuses (2) im Anschluß an den kürzeren Schenkel des L-förmigen Verschlußdeckels (11) eine demontierbare Wandplatte (12) vorgesehen ist.

6. Umspannstation nach einem der Ansprüche (4) oder (5),
**dadurch gekennzeichnet, daß** der kürzere Schenkel des L-förmigen Verschlußdeckels (11) und/oder die demontierbare Wandplatte (12) Lüftungsöffnungen aufweisen.

7. Umspannstation nach einem der vorhergehenden Ansprüche, **dadurch gekennzeichnet, daß** die Vorderwand des unteren Teilabschnittes des Gehäuses (2) einen schräg nach unten geneigten Teilabschnitt (35) aufweist, in dem eine Kabeldurchführung für das Hochspannungskabel (34) angeordnet ist und das Hochspannungskabel mittels eines Steckanschlusses, bei dem das Kabel quer zu der Steckrichtung des Steckers verläuft, an die Hochspannungsschaltanlage (16) anschließbar ist.

8. Umspannstation nach Anspruch 7, **dadurch gekennzeichnet, daß** die Hochspannungsschaltanlage (16) schräg nach oben geneigt orientiert ist.

9. Umspannstation einem der vorhergehenden Ansprüche, **dadurch gekennzeichnet, daß** der Gasstoß parallel zu den Kühlflächen (25) des Transformators gelenkt wird.

10. Umspannstation nach Anspruch 9, **dadurch gekennzeichnet, daß** die Kühlfächen (25) des Transformators vertikal verlaufen.

11. Umspannstation nach einem der vorhergehenden Ansprüche, **dadurch gekennzeichnet, daß** sie ein Prallblech (23) aufweist, durch das die durch eine Berstscheibe (22) der Hochspannungsschaltanlage (16) austretenden Gase nach hinten und dann in Verbindung mit der Ausbildung und Positionierung der Hochspannungsschaltanlage (16) nach unten abgelenkt werden.

12. Umspannstation nach einem der vorhergehenden Ansprüche, **dadurch gekennzeichnet, daß** der Gasstoß um den Transformator (15) herum auf einer ersten Seite nach unten (24), unterhalb des Transformators (15) horizontal (26) und auf einer zweiten Seite nach oben (27) gelenkt wird und schließlich durch in dem oberen Teilabschnitt (5) des Gehäuses (2) vorgesehene Lüftungsöffnungen austritt.

13. Umspannstation nach einem der vorhergehenden Ansprüche, **dadurch gekennzeichnet, daß** die Niederspannungsschaltanlage (30) in einer gesonderten Kammer (31), außerhalb der den Transformator und die Hochspannungsschaltanlage enthaltenden Hauptkammer (14), angeordnet ist.

14. Umspannstation nach Anspruch 13, **dadurch gekennzeichnet, daß** die gesonderte Kammer (31) sich in einem außen an der Station lösbar befestigbaren Modul (32) befindet.

15. Umspannstation nach Anspruch 14, **dadurch gekennzeichnet, daß** die Kabelverbindung zwischen der Niederspannungsschaltanlage (30) und der Hauptkammer (14) direkt durch eine im befestigten Zustand an das Gehäuse der Station angrenzende Rückwand (33) des Moduls (32) geführt ist.

16. Umspannstation nach einem der vorhergehenden Ansprüche, **dadurch gekennzeichnet, daß** die Höhe des aus dem Erdreich herausragenden oberen Teilabschnittes (5) des Gehäuses höchstens 1,1 m beträgt.

17. Umspannstation nach Anspruch 16, **dadurch gekennzeichnet, daß** der in das Erdreich einsenkbare untere Teilabschnitt (3) größer als der aus dem Erdreich herausragende obere Teilabschnitt (5) des Gehäuses (2) ist.

## Claims

1. Transformer station (1) in compact manufacturing method for a partial recess into the earth (4), with a transformer (15), a gas-insulated, capsuled high-voltage switching installation (16), a low-voltage switching installation (30) and a casing (2) to be locked by means of a cover (11), for which
the lower section of the casing (2) can be recessed into the earth, and the upper section of the casing (2) projects from the earth surface,
the transformer (15) is positioned beneath the high-voltage switching installation (16), in a common chamber (14) with the high-voltage switching installation (16), within which a free gas exchange is possible, and for which the high-voltage switching installation (16) is formed in a way that, in case of an arc discharge from the high-voltage switching installation (16), an outcoming gas blow is directed downwards in direction (24) to the transformer (15).

2. Transformer station according to claim 1,
**characterized in that** at least one part (7) of the casing (2) is made of precast concrete.

3. Transformer station according to claim 1 or 2,
**characterized in that** the transformer (15) and the high-voltage switching installation (16) are fixed to a common supporting structure (17), and that the cover (11) opens a sufficiently large section of the covering surface (9) of the casing (2), so that the supporting structure (17) with the transformer (15) and the high-voltage switching installation (16) can be inserted into the chamber (14) or taken out of the chamber (14) entirely as a functional unit (18), by means of a crane.

4. Transformer station according to any one of the preceding claims, **characterized in that** the cover (11) is L-shaped (in lateral view), and can be swiveled in a way that it opens the upper covering surface (9) and a part of the front side (10) of the upper section (5) of the casing (2).

5. Transformer station according to claim 4,
**characterized in that** a dismountable wall plate (12) is supplied at the front side (10) of the casing (2), in connection to the short shank of the L-shaped cover (11).

6. Transformer station according to any one of the claims (4) or (5), **characterized in that** the shorter shank of the L-shaped cover (11) and/or the dismountable wall plate (12) present ventilation orifices.

7. Transformer station according to any one of the preceding claims, **characterized in that** the front wall of the lower section of the casing (2) presents a section (35) inclined to the lower side, in which a cable guide for the high-voltage cable (34) is arranged, and for which the high-voltage cable can be connected to the high-voltage switching installation (16) by means of a plugged connection, for which the cable is oriented in transversal direction to the plugging direction of the plug.

8. Transformer station according to claim 7,
**characterized in that** the high-voltage switching installation (16) is oriented with an inclination to the upper side.

9. Transformer station according to any one of the previous claims, **characterized in that** the gas blow is directed in parallel to the cooling surfaces (25) of the transformer.

10. Transformer station according to claim 9,
**characterized in that** the cooling surfaces (25) of the transformer are arranged in vertical direction.

11. Transformer station according to any one of the preceding claims, **characterized in that** it presents a baffle plate (23) which deflects the gases coming out through a bursting disc (22) of the high-voltage switching installation (16), to the rear, and then downwards, in conjunction with the form and the position of the high-voltage switching installation (16).

12. Transformer station according to any one of the preceding claims, **characterized in that** the gas blow is directed around the transformer (15) in downward direction (24) on a first side, in horizontal direction (26) below the transformer (15), and in upward direction (27) on a second side, and finally comes out through aeration orifices supplied in the upper section (5) of the casing (2).

13. Transformer station according to any one of the preceding claims, **characterized in that** the low-voltage switching installation (30) is arranged in a separate chamber (31), outside of the main chamber (14) containing the transformer and the high-voltage switching installation.

14. Transformer station according to claim 13,
**characterized in that** the separate chamber (31) is located in a module (32) which can be detachably fixed to the outside of the station.

15. Transformer station according to claim 14,
**characterized in that** the cable connection between the lower voltage switching installation (30) and the main chamber (14) is guided directly through a back wall (33) of the module (32), contacting the casing of the station when in fixed state.

16. Transformer station according to any one of the preceding claims, **characterized in that** the height on the upper section (5) protruding from the earth is a maximum of 1.1 m.

17. Transformer station according to claim 16,
**characterized in that** the lower section (3) which can be recessed into the earth, is bigger than the upper section (5) of the casing (2), which protrudes from the earth.

## Revendications

1. Poste transformateur (1) à construction compacte pour l'encastrement partiel dans la terre (4), comprenant un transformateur (15), une installation de commutation à haute tension (16) blindée à isolation gazeuse, une installation de commutation à basse tension (30) et un coffret (2) pouvant être fermé par un couvercle (11),
la section partielle inférieure du coffret (2) étant encastrable dans la terre et la section partielle supérieure du coffret (2) dépassant de la surface du terrain,
le transformateur (15) étant positionné avec l'installation de commutation à haute tension (16), au-dessous de cette dernière, dans un compartiment commun (14), à l'intérieur duquel un libre échange de gaz est possible, et l'installation de commutation à haute tension (16) étant réalisée et positionnée de telle sorte qu'une onde de choc gazeuse sortant de l'installation de commutation à haute tension (16) dans le cas d'un défaut d'arc est acheminée vers le bas en direction (24) du transformateur (15).

2. Poste transformateur suivant la revendication 1, **caractérisé en ce qu'**au moins une partie (7) du coffret (2) est réalisée sous forme d'élément préfabriqué en béton.

3. Poste transformateur suivant l'une des revendications 1 et 2, **caractérisé en ce que** le transformateur (15) et l'installation de commutation à haute tension (16) sont fixés sur une ossature commune (17) de telle sorte, et le couvercle de fermeture (11) dégage une section transversale de la surface de couverture (9) du coffret (2) d'une telle taille, que l'ossature (17) avec le transformateur (15) et l'installation de commutation à haute tension (16) peut dans son ensemble, sous forme d'unité fonctionnelle (18), être mise en place dans le compartiment (14) ou être retirée de ce dernier au moyen d'une grue.

4. Poste transformateur suivant l'une des revendications précédentes, **caractérisé en ce que** le couvercle de fermeture (11) est réalisé en forme de L en vue latérale et peut pivoter de telle sorte que, lors de son ouverture, il dégage la surface de couverture supérieure (9) et une partie du côté avant (10) de la section partielle supérieure (5) du coffret (2).

5. Poste transformateur suivant la revendication 4, **caractérisé en ce qu'**une plaque murale démontable (12) est prévue sur le côté avant (10) du coffret (2) à la suite de la branche la plus courte du couvercle de fermeture (11) en L.

6. Poste transformateur suivant l'une des revendications 4 et 5, **caractérisé en ce que** la branche la plus courte du couvercle de fermeture en L (11) et/ou la plaque murale démontable (12) présentent des ouvertures d'aération.

7. Poste transformateur suivant l'une des revendications précédentes, **caractérisé en ce que** la paroi avant de la section partielle inférieure du coffret (2) présente une section partielle (35) inclinée obliquement vers le bas, dans laquelle est disposée une traversée pour le câble à haute tension (34) et le câble à haute tension peut être raccordé à l'installation de commutation à haute tension (16) au moyen d'une prise de courant enfichable, dans laquelle le câble s'étend transversalement à la direction d'enfichage de la prise.

8. Poste transformateur suivant la revendication 7, **caractérisé en ce que** l'installation de commutation à haute tension (16) est orientée avec une inclinaison oblique vers le haut.

9. Poste transformateur suivant l'une des revendications précédentes, **caractérisé en ce que** l'onde de choc gazeuse est acheminée parallèlement aux surfaces de refroidissement (25) du transformateur.

10. Poste transformateur suivant la revendication 9, **caractérisé en ce que** les surfaces de refroidissement (25) du transformateur s'étendent verticalement.

11. Poste transformateur suivant l'une des revendications précédentes, **caractérisé en ce qu'**il présente une chicane (23) par laquelle les gaz sortant par un disque d'éclatement (22) de l'installation de commutation à haute tension (16) sont déviés vers l'arrière, puis vers le bas en liaison avec la réalisation et le positionnement de l'installation de commutation à haute tension (16).

12. Poste transformateur suivant l'une des revendications précédentes, **caractérisé en ce que** l'onde de choc gazeuse est acheminée autour du transformateur (15), sur un premier côté vers le bas (24), au-dessous du transformateur (15) horizontalement (26), et sur un second côté vers le haut (27), et sort enfin par des ouvertures d'aération prévues dans la section partielle supérieure (5) du coffret (2).

13. Poste transformateur suivant l'une des revendications précédentes, **caractérisé en ce que** l'installation de commutation à basse tension (30) est disposée dans un compartiment séparé (31), à l'extérieur du compartiment principal (14) contenant le transformateur et l'installation de commutation à haute tension.

14. Poste transformateur suivant la revendication 13, **caractérisé en ce que** le compartiment séparé (31) se situe dans un module (33) qui peut être fixé à l'extérieur de façon amovible sur le poste.

15. Poste transformateur suivant la revendication 14, **caractérisé en ce que** la liaison par câble entre l'installation de commutation à basse tension (30) et le compartiment principal (14) est guidée directement au travers d'une paroi arrière (33) du module (32), adjacente au coffret du poste à l'état fixé.

16. Poste transformateur suivant l'une des revendications précédentes, **caractérisé en ce que** la hauteur de la section partielle supérieure (5) du coffret dépassant de la terre est au maximum de 1,1 m.

17. Poste transformateur suivant la revendication 16, **caractérisé en ce que** la section partielle inférieure (3), encastrable dans la terre, est plus grande que la section partielle supérieure (5), dépassant de la terre, du coffret (2).
